# EUROPEAN PATENT SPECIFICATION

(11) **EP 0 471 424 B1**
(45) Date of publication and mention of the grant of the patent: **04.09.1996**
(21) Application number: 91202813.1
(22) Date of filing: 26.03.1990
(51) Int. Cl.: H04N 11/00

(54) **Extended composite television system**
Ausgedehntes zusammengesetztes Fernsehsystem
Système de télévision composite étendue

(30) Priority: 28.03.1989 NL 8900753; 31.10.1989 NL 8902688
(43) Date of publication of application: 19.02.1992
(62) Divisional of application: 90200694.9
(73) Proprietor: Philips Electronics N.V., 5621 BA Eindhoven (NL)
(72) Inventor: Führen, Marcel, NL-5656 AA Eindhoven (NL); Annegarn, Marcellinus Joseph Johannes C., NL-5656 AA Eindhoven (NL); van de Polder, Leendert Johan, NL-5656 AA Eindhoven (NL); Raven, Johannes Gerardus, NL-5656 AA Eindhoven (NL)
(74) Representative: Kooiman, Josephus Johannes Antonius

(56) References cited:
- WO-A-89/01273
- WO-A-90/04311

## Description

The invention relates to an extended composite television system in which an extended television signal is encoded in compatibility with conventional television signals.

The article "Encoding for Compatibility and Recoverability in the ACTV system", IEEE transactions on Broadcasting, vol. BC33, no.4, December 1987, pp. 116-123 discloses an extended television system in which the luminance signal is bandstop filtered in three dimensions to produce a spectral "hole" into which the chrominance signal is quadrature modulated at 3.58 Mhz. The chrominance signal is also bandlimited in all three dimensions so that luminance and modulated chrominance should have little or no overlap in the three-dimensional spectrum. However, the amount of overlap depends on the quality of the three-dimensional filters, and good three-dimensional filters are rather complex and costly.

The non-prepublished international application WO-A-90/04311, which is prior art under Article 54(3,4) EPC in conjunction with Article 158 (1,2) EPC for the designated contracting states DE, FR and GB, and the corresponding non-prepublished Spanish application ES-A-2,016,186 in view of which the applicant has voluntarily filed a separate set of claims for the designated contracting state ES, disclose an apparatus for combining and separating components of a video signal in which the luminance component of a video signal is processed to produce a luminance component with groups of mutually exclusive spatially correlated image pixels of identical value within each group. In one embodiment, each group comprises vertically averaged pixels 1H apart within a field. In another embodiment, each group comprises vertically averaged pixels 263H apart within a frame. In yet another embodiment, the elements to be grouped are 525H apart. The chrominance component is similarly processed. The processed luminance and chrominance components are combined using an invertible algorithm involving additive and subtractive signal combination. At a decoder, the inverse of the combining algorithm is used to separate the combined signal into its constituent luminance and chrominance component parts, without luminance-chrominance crosstalk. The described system, in which signals 1H, 263H or 525H apart are combined, is only suitable for NTSC-like television signals.

It is one of the objects of the invention to provide an extended composite television system which is compatible with conventional composite television systems and in which an improved separation of luminance and chrominance is obtained at little cost. It is a further object to provide an extended composite television system which is especially suitable for PAL-like television signals.

In view of the non-prepublished prior art, separate sets of claims are filed for the designated contracting states DE, ES, FR and GB on the one hand, and for the designated contracting states AT, BE, CH, DK, GR, IT, LI, LU, NL and SE on the other hand.

In accordance with a first aspect of the invention, there is provided a method of encoding extended television signals as defined in claim 1 of both sets of claims.

In accordance with a second aspect of the invention, there is provided an arrangement for decoding extended television signals as defined in claim 7 of both sets of claims.

In accordance with a third aspect of the invention, there is provided a method of decoding extended television signals as defined in claim 14 of both sets of claims.

Advantageous embodiments are defined in the dependent claims.

The invention is based on the recognition that if, for example, the chrominance information were pairwise equal at two sampling points and the luminance information (i.e. the high horizontal frequencies) were also equal, the high-frequency luminance information can be separated again from the modulated chrominance information in an extended decoder according to the invention by, for example, (i) subtracting the information of the pairs at the above-mentioned sampling points and by dividing them by 2 (this yields chrominance), and by (ii) averaging (this yields high-frequency luminance). Subsequently a vertical-temporal interpolation must be carried out both with respect to chrominance and the high-frequency luminance.

These and other (more detailed) aspects of the invention will now be described and elucidated by way of non-limitative examples and with reference to the accompanying drawings.

In the drawings:
Fig. 1 shows important frequencies of a PAL signal in the vertical-temporal frequency domain;
Fig. 2a shows a succession of a decimating filter and an interpolating filter for use in an extended encoder or decoder according to the invention;
Fig. 2b shows a simplified embodiment of a decimating filter;
Fig. 2c shows a simple embodiment of an interpolating filter;
Fig. 3 shows an extended encoder according to a first aspect of the invention, which eliminates cross-color and cross-luminance;
Fig. 4 shows an extended decoder according to this aspect of the invention;
Fig. 5a shows a first embodiment of an extended encoder for use with the SECAM television system;
Fig. 5b shows the main features of a second embodiment of an extended encoder for use with the SECAM television system; and
Fig. 6 shows an embodiment of an extended decoder for use with the SECAM television system.

Extended composite TV systems are understood to mean existing composite TV systems (such as PAL, NTSC, SECAM) which are extended in a compatible manner so that additional operations are carried out in an extended encoder as well as in an extended decoder. In this application a technique of time-variant filtering will be elaborated with reference to an example, elucidated by means of the drawings, of a novel manner of obtaining very good luminance/chrominance separation in, for example, a PAL or a SECAM decoder.

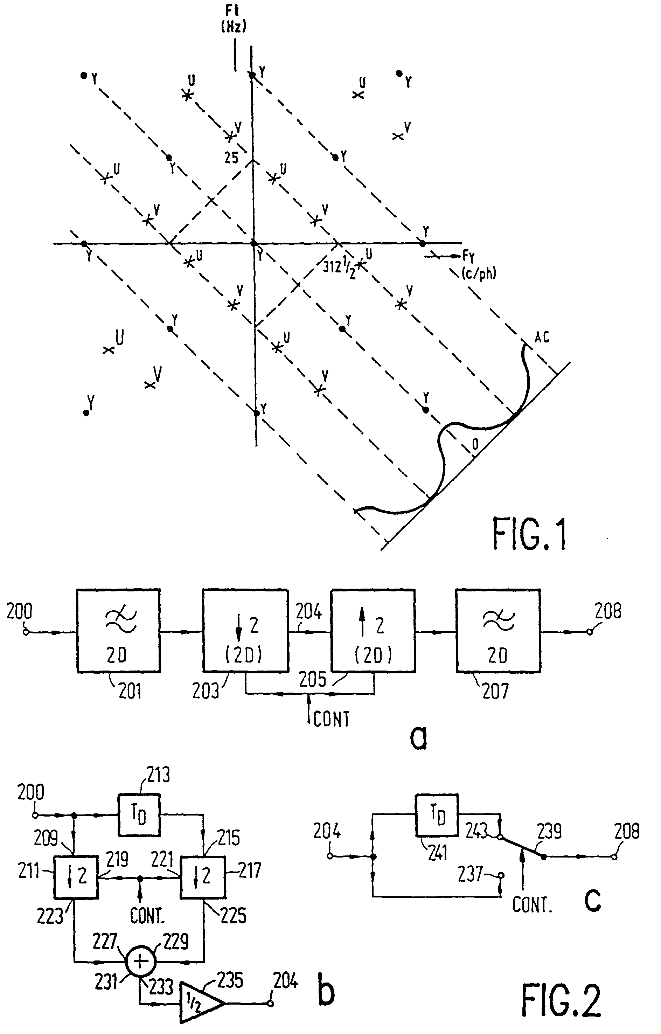

The problem of cross-color (XC) and cross-luminance (XL) reduction in PAL has been known for a long time and is described in many publications, which are largely based on 1, 2 or 3-dimensional linear time-invariant filters in an encoder and/or a decoder. A fundamental restriction is that a perfect separation of luminance signals Y and chrominance signals U/V can only be obtained if they are separated from one another by means of ideal (i.e. "rectangular") filters in the 3D spectrum. A solution which is often used is a separate horizontal filter which separates the low horizontal and high horizontal Y frequencies whereafter the high horizontal Y frequencies and the U/V frequencies in the vertical-temporal domain are filtered so that a minimum amount of overlap will occur between Y and U/V. This vertical-temporal filtering can be performed on the basis of 2TL, 312TL or 1250TL delay elements, in which TL indicates the line period. It will be evident that for considerations of implementation and costs the number of delay elements will be limited. This has the drawback that the filters will have no well-defined pass and stop bands so that a residue of XC and XL will always exist. 3-Tap (1-2-1) transversal filters are often used which are a favorable compromise between complexity and residue of XC and XL. If these filters are used in the encoder as well as the decoder, in the frequency domain a [COS(x)]**4 amplitude characteristic will overall be produced in the Ft=0, Ft=Fy or Fy=0 direction, respectively, so that the vertical-temporal bandwidth is relatively small, which is indicated in Fig. 1 for a realisation using 312TL delay elements. In the case of 312TL (and certainly in the case of 1250TL) delay elements, a temporal loss of resolution (blur) is expected to occur, which should especially be visible at the edges of moving colored faces.

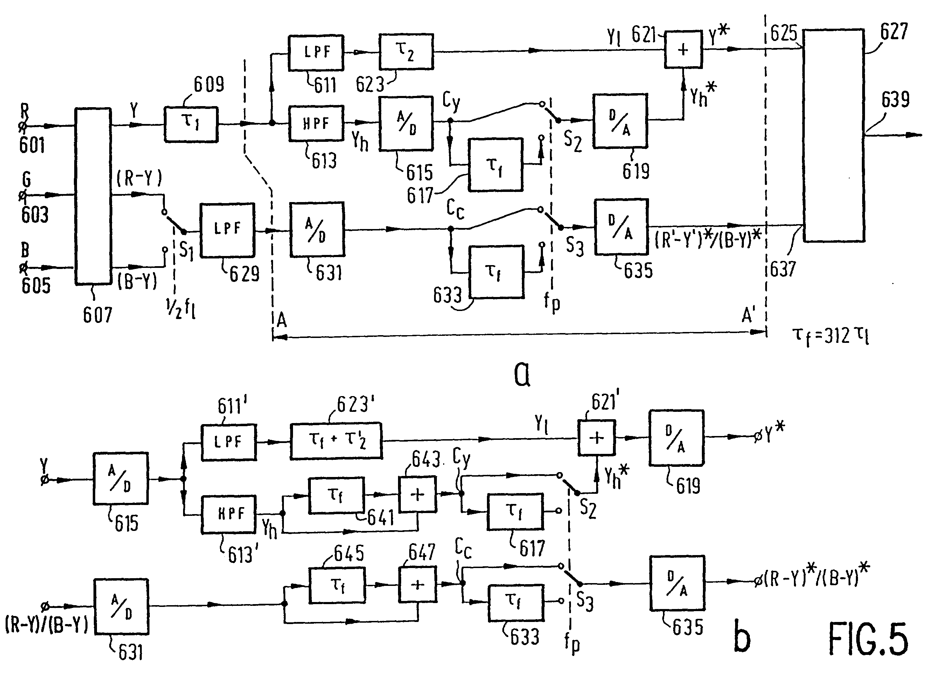

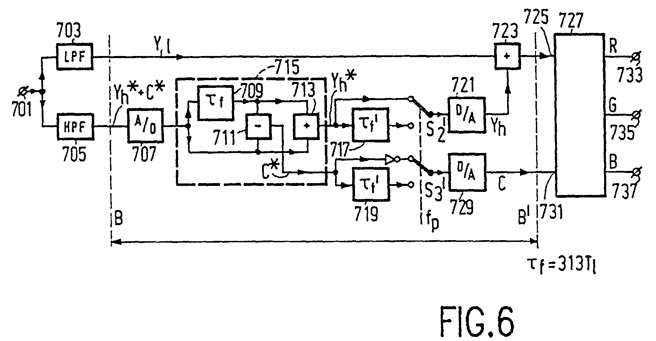

The filtering techniques according to the present invention provide a perfect separation of Y and U/V by means of linear time-variant filtering in contrast to the above mentioned time-invariant filtering. This invention can also be applied to the SECAM system, which will also be elucidated with reference to Figs. 5 and 6.

The principle of the time-variant filtering technique according to the present invention is based on the fact that, starting from a given sampling point, both the "U" subcarrier and the "V" subcarrier are shifted (substantially 180 degrees) in phase at the sampling point after 2TL, 312TL or 1250TL. The "U" subcarrier is understood to mean the standard PAL subcarrier, while the "V" subcarrier is understood to mean the standard PAL subcarrier multiplied by a line-alternating +/- 1. It is to be noted that while in theory, the present method could be used with a delay period Td which is equal to 2, 312 or 1250 times T1, the Applicants have found that the picture quality is very much better when Td is equal to 312 T1 rather than when Td is equal to 2 T1 or 1250 T1.

If the U/V information were pairwise equal at two sampling points and the Y information (i.e. the high horizontal frequencies) were also equal, the high-frequency Y information could be separated again from the modulated U/V information in an extended decoder according to the invention, after a standard PAL encoding operation has been carried out, by (i) subtracting the information of the pairs at the above-mentioned sampling points and by dividing them by 2 (this yields U/V which is subsequently to be demodulated), and by (ii) averaging (this yields the high-frequency Y components). Subsequently a vertical-temporal interpolation must be carried out both with respect to U/V and the high frequency Y.

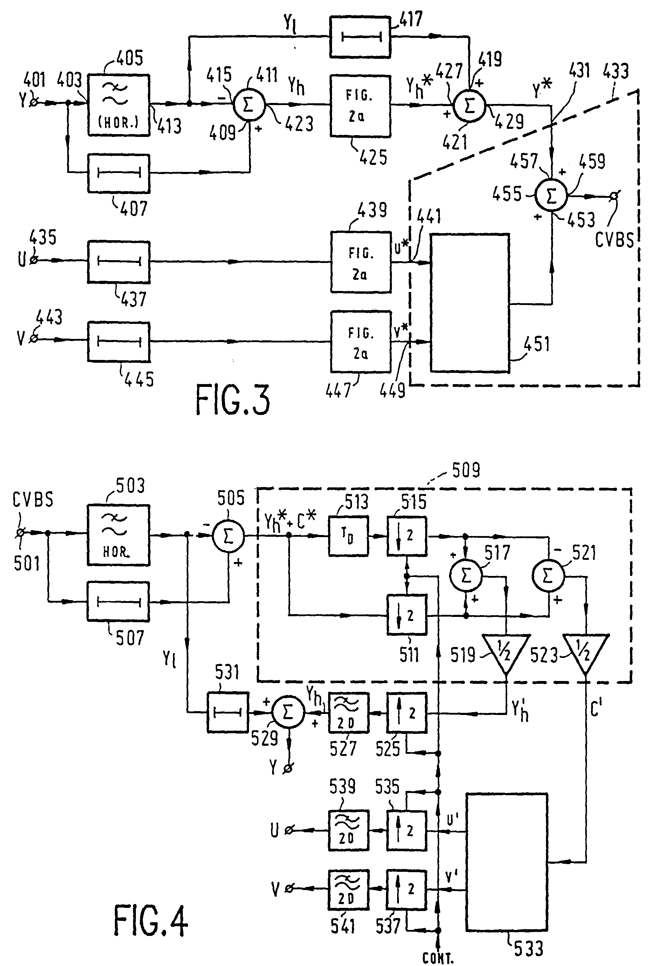

The fact that the information should be identical at the two above-mentioned sampling points actually involves 4 actions which have to be performed in the extended encoder according to the invention:
1) A vertical-temporal low pass filtering (block 201 in Fig. 2a), which may be a simple averaging. Actually, this filter is not essential but it does prevent unnecessary aliasing.
2) A vertical-temporal sampling rate decrease by a factor of 2. Together with action 1 this is a decimating filter and thus time- variant. In Fig. 2a, this is indicated by block 203.
3) A vertical-temporal sampling rate increase by a factor of 2, see block 205. This sampling rate increase occurs in phase with the sampling rate decrease of Action 2, which is indicated in Fig. 2a by applying the same control signal CONT to the blocks 203 and 205.
4) A vertical-temporal repetition which is actually the simplest low pass filter. Together with action 3 this is an interpolating filter and thus time-variant. In Fig. 2a this is indicated by block 207.

The total action is thus a succession of a decimating filter and an interpolating filter in which the input and output sampling structures are the same. The general model is shown in Fig. 2a; the decimating filter may, however be simplified as is shown in Fig. 2b while a simple interpolating filter can be constructed as is shown in Fig. 2c. These signal operations are to be performed at the high horizontal frequency components of Y and on the total U/V signals. Fig. 3 shows the modifications with respect to the current situation at the encoder end.

Fig. 4 shows the modifications with respect to the current situation at the decoder end. Firstly, the high frequencies are to be separated from the low frequencies, whereafter the framed section 509 in Fig. 4 separates the high luminance frequencies Yh* from the chrominance modulate C* by means of a decimating filter (an averager). The decimated high-frequency luminance signal Yh is subsequently added to the low-frequency luminance signal Y1 via an interpolating filter 525,527. The color demodulation is only to be operative during 1 (active) field period per frame period, whereafter the demodulated (and decimated) U/V signals are interpolated to the original interlace sampling structure. In theory, these interpolating filters may be rendered as complex as is desirable, but repeaters will be generally used for this purpose (see Fig. 2b). Also the decimating filters in the encoder can be rendered as complex as is desirable.

A last important point is that the means for decreasing and increasing the sampling rate in the encoder and the decoder should be in phase. To this end the composite PAL signal provides amply sufficient possibilities for the purpose of synchronisation.

It will be evident that the techniques described (using an ideal horizontal bandsplitter filter) yield a perfect separation of Y and U/V by means of an extended decoder according to the invention, with the drawback of some vertical-temporal aliasing due to the non-ideal decimating filter, which drawback occurs both for the standard decoder and the extended decoder according to the invention. A further drawback of the techniques described is a residue of vertical-temporal repetition spectra caused by the sampling rate decrease, which residue for the standard decoder is determined by the non-ideal interpolating filter (the repeater) and which residue for the extended decoder is determined by the interpolating filter present in this decoder, which filter also may be a repeater. However, with the simplest decimating and interpolating filters a [COS(x)]**2 amplitude characteristic is overall obtained in the frequency spectrum in the Ft=0, Fy=Ft or Fy=O directions so that a vertical-temporal bandwidth which is twice as large is obtained as compared with linear time-invariant (1-2-1) transversal filters.

Fig. 2b shows an embodiment of the decimating filter shown as two separate blocks 201 and 203 in Fig. 2a. An input 200 of the decimating filter is connected to an input 209 of a first sample rate decreasing circuit 211 and to an input 215 of a second sample rate decreasing circuit 217 via a delay 213. The control signal CONT is applied to control inputs 219 and 221 of the sample rate decreasing circuits 211 and 217, respectively. Outputs 223 and 225 of the sample rate decreasing circuits 211 and 217 are connected to inputs 227 and 229, respectively, of an adder 231, an output 233 of which is connected to a terminal 204 via a halving circuit 235.

Fig. 2c shows an embodiment of the interpolating filter shown as two separate blocks 205 and 207 in Fig. 2a. An input of the interpolating filter, constituted by the terminal 204, is connected to a first switching contact 237 of a change-over switch 239 and, via a delay 241, to a second switching contact 243 of the switch 239 which is further connected to an output 208 of the interpolating filter. As shown, for example in the extended encoders according to Fig. 5a or 5b, the sample rate decreasing circuits 211 and 217 of Fig. 2b are not really required because samples to be removed by these circuits 211 and 217 are left unused by the switch 239 shown in Fig. 2c. The sample rate decreasing circuits 211 and 217 are shown to indicate that circuit elements subsequent to these circuits could be used for other purposes during the periods when no samples are supplied by the sample rate decreasing circuits, for example, during every second field period.

Fig. 3 shows a time-variant filtering encoder according to the invention for enabling a display at the decoder side of, for example, a PAL signal without cross-luminance and cross-color errors. An input 401 for the luminance signal Y is connected to an input 403 of a horizontal low-pass filter 405. The input 401 is also connected via a delay 407 to a non-inverting input 409 of a subtracter 411. An output 413 of the horizontal low-pass filter 405 is connected to an inverting input 415 of the subtracter 411 and supplies a low-frequency luminance signal Y1 to a first input 419 of an adder 421 via a delay 417. An output 423 of the subtracter 411 supplies a high-frequency luminance signal Yh to a decimating/interpolating filter 425 (see Fig. 2a) which supplies a time-variant filtered high-frequency luminance signal Yh* to a second input 427 of the adder 421. An output 429 of the adder 421 supplies a time-variant filtered luminance signal Y* to a luminance signal input 431 of a PAL encoder 433.

An input 435 for the chrominance signal U is connected to a decimating/interpolating filter 439 (see Fig. 2a) via a delay 437 for supplying a time-variant filtered chrominance signal U* to a U signal input 441 of the PAL encoder 433.

An input 443 for the chrominance signal V is connected to a decimating/interpolating filter 447 (see Fig. 2a) via a delay 445 for supplying a time-variant filtered chrominance signal V* to a V signal input 449 of the PAL encoder 433.

The chrominance signal inputs 441 and 449 of the PAL encoder 443 are connected to a PAL chrominance modulator 451 for supplying a modulated chrominance signal C* to a first input 453 of an adder 455. A second input 457 of the adder 455 is connected to the luminance signal input 431 of the PAL encoder 433. An output 459 of the adder 455 supplies the time-variant filtered encoded video signal CVBS.

Fig. 4 shows a time-variant filtering decoder according to the invention for displaying, for example, a PAL signal without cross-luminance and cross-color errors. The time-variant filtered encoded video signal CVBS is applied to an input 501 of the decoder which supplies a low-frequency luminance signal Y1 by means of a horizontal low-pass filter 503 to an inverting input (-) of a subtracter 505. The input 501 is also connected via a compensating delay 507 to a non-inverting input (+) of the subtracter 505. The subtracter 505 supplies a filtered high-frequency video signal Yh*+C* to the decimating separating filter 509 for obtaining a decimated high-frequency luminance signal Yh' and a decimated chrominance signal C'.

In the decimating separating filter 509 the high-frequency video signal Yh*+C* is applied to a first sample rate decreasing circuit 511, and to a second sample rate decreasing circuit 515 via a delay 513. Output signals of the two sample rate decreasing circuits 511 and 515 supply the decimated high-frequency luminance signal Yh' via an adder 517 and a first halving circuit 519, and the decimated chrominance signal C' via a subtracter 521 and a second halving circuit 523. The high-frequency decimated luminance signal Yh' is applied to an interpolating filter comprising a sample rate increasing circuit 525 and a two-dimensional low-pass filter 527 for obtaining a high-frequency luminance signal Yh. An adder 529 combines the high-frequency luminance signal Yh and the low-frequency luminance signal Y1, which has been delayed by a compensating delay 531, to a timevariant filtered decoded luminance signal Y.

The decimated chrominance signal C' is applied to a conventional, or standard PAL demodulator 533 for obtaining decimated chrominance signals U' and V'. The decimated chrominance signals U' and V' are applied to interpolating filters comprising sample rate increasing circuits 535 and 537 and two-dimensional low-pass filters 539 and 541, respectively, for obtaining time-variant filtered decoded chrominance signals U and V, respectively. All sample rate decreasing circuits 511 and 515 and the sample rate increasing circuits 525, 535 and 537 are controlled by the same control signal CONT.

To sum up the above-described technique, an essentially perfect separation of luminance and chrominance can be obtained in a transmitter as well as a receiver of, for example, a PAL television system by means of decimating and interpolating three-dimensional filters (time-variant filtering), so that the cross-color and cross-luminance errors are eliminated, but with the drawback of some vertical-temporal aliasing in high-frequency luminance and chrominance.

In the NTSC and in the PAL systems the crosstalk between chrominance and luminance components can be reduced by using so-called comb filters. In the SECAM system, as currently used, the use of comb filters is impossible because of the frequency modulation method used in the SECAM system, so that there is no reliable phase relationship between successive or adjacent lines.

According to the following aspect of the invention, it is proposed to modify the transmitted signal in such a way that there is a fixed phase relationship for every two adjacent picture lines, which leads to the possibility of separating chrominance and luminance components. At the encoder end this can in principle be realised as is shown in Fig. 5a. During the first field period (of 20 ms) of a frame period (40 ms), the switches S2 and S3 are in the state shown and a fully unmodified SECAM signal is transmitted. During the second field period, S2 and S3 are in the other state and the delay of the chrominance information is 312 line periods, the same applies to the high-frequency luminance components. On the basis of the SECAM standard a delay of 312 line periods results (because 312 is a sixfold) in that the phases of the chrominance carriers are always in phase opposition during the second field period as compared with 312 line periods earlier.

This provides the possibility of separating the high-frequency luminance components from the chrominance components, as is shown in Fig. 6. The diagrams of Figs. 5a and 6 are examples of a number of possibilities. Fig. 5b shows a slightly different embodiment of the extended encoder according to the present aspect of the invention. In this case an averaging operation is carried out for two successive picture lines. The digital signal treatment is used to ensure that the signals are exactly equal after 312 line periods.

The most important advantage of the proposal is that the description of the SECAM standard need not be modified. The method can thus be introduced without any standard modification. In the above proposal, the switches S2 and S3 in the encoder and the decoder are yet to be coupled in phase.

In the time-variant filtering SECAM encoder according to the invention shown in Fig. 5a, red (R), green (G) and blue (B) picture signals at inputs 601, 603 and 605 are applied to a matrix circuit 607 for obtaining a luminance signal Y and color difference signals R-Y and B-Y. The luminance signal Y is applied via a delay 609 to a low-pass filter (LPF) 611 for obtaining a low-frequency luminance signal Y1 and to a high-pass filter (HPF) 613 for obtaining a high-frequency luminance signal Yh. The high-frequency luminance signal Yh is applied after A/D conversion in A/D converter 615, to a first switching contact of the change-over switch S2 operating at the picture frequency (fp), and to a second switching contact of the switch S2 via a delay 617 having a delay time of one field period. After D/A conversion in a D/A converter 619, the time-variant filtered high-frequency luminance signal Yh* is applied to an adder 621 to which also the low-frequency luminance signal Y1 delayed by a compensating delay 623 is applied. The adder 621 applies the time-variant filtered luminance signal Y* to a luminance signal input 625 of a SECAM encoder 627. The color difference signals R-Y and B-Y are applied to respective switching contacts of a change-over switch S1 operating at half the line frequency (1/2 fl) which thus supplies either the one or the other color difference signal in a line alternating manner in accordance with the SECAM standard. After low pass filtering by a low-pass filter (LPF) 629 and A/D conversion by an A/D converter 631, the supplied color difference signal is applied to a first switching contact of a change-over switch S3 operating at the picture frequency (fp) and, via a delay 633 having a delay time of one field period, to a second switching contact of the switch S3. After D/A conversion by a D/A converter 635, the time-variant filtered color difference signal (R-Y)* or (B-Y)* is applied by the switch S3 to a color difference signal input 637 of the SECAM encoder 627. An output 639 of the SECAM encoder furnishes a time-variant filtered SECAM encoded video signal.

The part of the Figure between the broken lines A and A' is, according to the invention, added to the otherwise known SECAM encoder.

Fig. 5b shows an alternative embodiment of the time variant filter circuit shown between the broken lines A and A' in Fig. 5a. In Fig. 5b averaging takes place over two picture lines, which is an embodiment of the vertical-temporal low-pass filtering of the block 201 in Fig. 2a. The A/D and D/A converters 615 and 619 are positioned in Fig. 5b at the beginning and the end, respectively, of the luminance signal path so that the analog filters 611 and 613 and adder 621 of Fig. 5a are replaced in Fig. 5b by their digital equivalents 611', 613' and 621', respectively. In the high-frequency luminance signal path an averager comprising a field delay 641 and an adder 643 is arranged between the high-pass filter 613 and the junction point cy in Fig. 5b. The delay period of the compensating delay 623' is extended by one field period as compared with the delay period of its equivalent circuit 623 in Fig. 5a. In the chrominance signal path an averager comprising a field delay 645 and an adder 647 is arranged between the A/D converter 631 and the junction point cc.

In the time-variant filtering SECAM decoder according to the invention as shown in Fig. 6, the time-variant filtered encoded SECAM video signal is applied to an input 701. The video signal is applied to a low-pass filter (LPF) 703 for obtaining a low-frequency luminance signal Y1, and to a high-pass filter (HPF) 705 for obtaining a time-variant filtered high-frequency video signal Yh*+C*. The high-frequency video signal is applied via an A/D converter 707 to a luminance-chrominance splitter 715 comprising a delay 709, a subtracter 711 and an adder 713 for obtaining a time-variant filtered high-frequency luminance signal Yh* and a time-variant filtered chrominance signal C*.

The high-frequency luminance signal Yh*, which has been time-variant filtered in the encoder, is applied to a time-variant filter comprising a delay 717 and a change-over switch S2' operating at the picture frequency (fp) for obtaining a high-frequency luminance signal Yh.

The chrominance signal C*, which has been time-variant filtered in the encoder, is applied to a time-variant filter comprising a delay 719 and a change-over switch S3' operating at the picture frequency (fp) for obtaining a chrominance signal C. The high-frequency luminance signal Yh is applied via a D/A converter 721 to an adder 723 to which also the low-frequency luminance signal Y1 is applied for obtaining a luminance signal Y which is applied to a luminance signal input 725 of a SECAM decoder 727. The chrominance signal C is applied via a D/A converter 729 to a chrominance signal input 731 of the SECAM decoder 727. Outputs 733, 735, 737 of the SECAM decoder 727 supply a red (R), green (G) and a blue (B) picture signal, respectively.

The part of the Figure between the broken lines B and B' is, according to the invention, added to the otherwise known SECAM decoder.

From reading the present disclosure, other modifications will be apparent to persons skilled in the art. In the claims, any reference signs placed between parentheses shall not be construed as limiting the claim.

## Claims (Claims for the following Contracting State(s): AT, BE, CH, DK, GR, IT, LI, LU, NL, SE)

1. A method of encoding extended television signals, said method comprising the steps of:
providing (401, 435, 443; 607) luminance (Y) and chrominance (U,V) signals;
separating (405-409; 611, 613) said luminance signals (Y) into low-frequency luminance signals (Y1) and high-frequency luminance signals (Yh);
time-variant filtering (425, 439, 447; 641, 643, 617, S2, 645, 647, 633, S3) said high-frequency luminance signals (Yh) and said chrominance signals (U,V) to furnish time-variant filtered luminance signals (Yh*) and time-variant filtered chrominance signals (U*,V*); and
combining (421, 451, 455; 627) said low-frequency luminance signals (Y1), said time-variant filtered luminance signals (Yh*) and said time-variant filtered chrominance signals (U*,V*) to furnish said extended television signals.

2. A method as claimed in claim 1, wherein said time-variant filtering step (425, 439, 447; 641, 643, 617, S2, 645, 647, 633, S3) includes the steps of:
delaying (213; 641, 645) a filter input signal over 2, 312 or 1250 lines to obtain a delayed signal; and
combining (229, 235; 643, 647) said filter input signal and said delayed signal.

3. A method as claimed in claim 1, wherein said time-variant filtering step (425, 439, 447; 641, 643, 617, S2, 645, 647, 633, S3) comprises interpolating (Fig. 2c) a signal to be time-variant filtered, said interpolating step comprising the steps of:
delaying (241; 617, 633) an interpolation input signal to furnish a delayed signal; and
selecting (239; S2, S3) between said interpolation input signal and said delayed signal to furnish a time-variant filtered signal.

4. A method as claimed in claim 3, wherein said input signal is delayed by a field period, and said selecting step is a field alternating selection.

5. A method as claimed in claim 3, wherein said time-variant filtering step (425, 439, 447; 641, 643, 617, S2, 645, 647, 633, S3) comprises the step of decimating said signal to be time-variant filtered, said decimating step comprising the step of averaging (641-647) a decimation input signal over a field period to furnish said interpolation input signal.

6. A method as claimed in claim 1 or 2, wherein said combining step (421, 451, 455) comprises the steps of:
quadrature modulating (451) said time-variant filtered chrominance signals (U*, V*) to furnish modulated chrominance signals; and
adding (421, 455) said modulated chrominance signals, said low-frequency luminance signals (Y1) and said time-variant filtered luminance signals (Yh*) to furnish said extended television signals.

7. An arrangement for decoding extended television signals, comprising:
separating means (503-523, 533; 703-715) for providing low-frequency luminance signals (Y1), high-frequency luminance information signals (Yh'), and chrominance information signals (U', V') in response to said extended television signals;
means (525, 527; 717, S2') for time-variant filtering said high-frequency luminance information signals (Yh') to furnish high-frequency luminance signals (Yh);
means (529; 723) for combining said low-frequency luminance signals (Y1) and said high-frequency luminance signals (Yh') to furnish luminance signals (Y); and
means (535-541; 719, S3') for time-variant filtering said chrominance information signals (U', V') to furnish chrominance signals (U, V).

8. An arrangement as claimed in claim 7, wherein said separating means (503-523, 533; 703-715) comprise:
means (503-507; 703, 705) for separating said extended television signals into low-frequency luminance signals (Y1) and high-frequency composite signals (Yh* + C*);
means (513; 709) for delaying said high-frequency composite signals (Yh* + C*);
means (517, 519; 713) for adding said high-frequency composite signals (Yh* + C*) and said delayed high-frequency composite signals to furnish said high-frequency luminance information signals (Yh'); and
means (521, 523, 533; 707, 709, 711) for processing said high-frequency composite signals (Yh* + C*) to furnish said chrominance information signals (U', V').

9. An arrangement as claimed in claim 7, wherein both said time-variant filtering means (525, 527; 535-541; 717, 719, S2', S3') include:
means (213; 717, 719) for delaying a filter input signal over 2, 312 or 1250 lines to obtain a delayed signal; and
means (229, 235; S2', S3') for combining said filter input signal and said delayed signal.

10. An arrangement as claimed in claim 7, wherein both said time-variant filtering means (525, 527; 535-541; 717, 719, S2', S3') comprise means (Fig. 2c) for interpolating a signal to be time-variant filtered, said interpolating means comprising:
means (241; 717, 719) for delaying an interpolation input signal to furnish a delayed signal; and
means (239; S2', S3') for selecting between said interpolation input signal and said delayed signal to furnish a time-variant filtered signal.

11. An arrangement as claimed in claim 10, wherein said delaying means include a field delay, and said selecting means include a field alternating selector.

12. An arrangement as claimed in claim 10, wherein said time-variant filtering means comprise means for decimating said signal to be time-variant filtered, said decimating means comprising means (641-647) for averaging a decimation input signal over a field period to furnish said interpolation input signal.

13. An arrangement as claimed in claim 8, wherein said processing means (521, 523, 533; 711) comprise means (521; 711) for subtracting said high-frequency composite signals and said delayed high-frequency composite signals to furnish said chrominance information signals (C').

14. A method of decoding extended television signals, comprising the steps of:
separating (503-523, 533; 703-715) said extended television signals to provide low-frequency luminance signals (Y1), high-frequency luminance information signals (Yh'), and chrominance information signals (U', V');
time-variant filtering (525, 527; 717, S2') said high-frequency luminance information signals (Yh') to furnish high-frequency luminance signals (Yh);
combining (529; 723) said low-frequency luminance signals (Y1) and said high-frequency luminance signals (Yh) to furnish luminance signals (Y);
time-variant filtering (535-541; 719, S3') said chrominance information signals (U', V') to furnish chrominance signals (U, V).

15. A method as claimed in claim 14, wherein said separating step (503-523, 533; 703-715) includes the steps of:
separating (503-507; 703, 705) said extended television signals into low-frequency luminance signals (Y1) and high-frequency composite signals (Yh* + C*);
delaying (513; 709) said high-frequency composite signals (Yh* + C*);
adding (517, 519; 713) said high-frequency composite signals (Yh* + C*) and said delayed high-frequency composite signals to furnish said high-frequency luminance information signals (Yh'); and
processing (521, 523, 533; 707, 709, 711) said high-frequency composite signals (Yh* + C*) to furnish said chrominance information signals (U', V').

16. A method as claimed in claim 14, wherein both said time-variant filtering steps (525, 527; 535-541; 717, S2', 719, S3') include the steps of:
delaying (213; 717, 719) a filter input signal over 2, 312 or 1250 lines to obtain a delayed signal; and
combining (229, 235; S2', S3') said filter input signal and said delayed signal.

## Claims (Claims for the following Contracting State(s): DE, ES, FR, GB)

1. A method of encoding extended television signals, said method comprising the steps of:
providing (401, 435, 443; 607) luminance (Y) and chrominance (U,V) signals;
separating (405-409; 611, 613) said luminance signals (Y) into low-frequency luminance signals (Y1) and high-frequency luminance signals (Yh);
time-variant filtering (425, 439, 447; 641, 643, 617, S2, 645, 647, 633, S3) said high-frequency luminance signals (Yh) and said chrominance signals (U,V) to furnish time-variant filtered luminance signals (Yh*) and time-variant filtered chrominance signals (U*,V*); and
combining (421, 451, 455; 627) said low-frequency luminance signals (Y1), said time-variant filtered luminance signals (Yh*) and said time-variant filtered chrominance signals (U*,V*) to furnish said extended television signals,
wherein said time-variant filtering step (425, 439, 447; 641, 643, 617, S2, 645, 647, 633, S3) includes the step of delaying (213, 241; 617, 633, 641, 645) a filter input signal over 2, 312 or 1250 lines to obtain a delayed signal, whereby a time-variant filtered signal is obtained (229, 235, 239; 643, 647, S2, S3) in dependence upon said delayed signal and said filter input signal.

2. A method as claimed in claim 1, wherein in said delaying step the filter input signal is delayed over 312 lines to obtain the delayed signal.

3. A method as claimed in claim 1, wherein said time-variant filtering step (425, 439, 447; 641, 643, 617, S2, 645, 647, 633, S3) comprises interpolating (Fig. 2c) a signal to be time-variant filtered, said interpolating step comprising the steps of:
delaying (241; 617, 633) an interpolation input signal to furnish a delayed signal; and
selecting (239; S2, S3) between said interpolation input signal and said delayed signal to furnish a time-variant filtered signal.

4. A method as claimed in claim 3, wherein said input signal is delayed by a field period, and said selecting step is a field alternating selection.

5. A method as claimed in claim 3, wherein said time-variant filtering step (425, 439, 447; 641, 643, 617, S2, 645, 647, 633, S3) comprises the step of decimating said signal to be time-variant filtered, said decimating step comprising the step of averaging (641-647) a decimation input signal over a field period to furnish said interpolation input signal.

6. A method as claimed in claim 1 or 2, wherein said combining step (421, 451, 455) comprises the steps of:
quadrature modulating (451) said time-variant filtered chrominance signals (U*, V*) to furnish modulated chrominance signals; and
adding (421, 455) said modulated chrominance signals, said low-frequency luminance signals (Y1) and said time-variant filtered luminance signals (Yh*) to furnish said extended television signals.

7. An arrangement for decoding extended television signals, comprising:
separating means (503-523, 533; 703-715) for providing low-frequency luminance signals (Y1), high-frequency luminance information signals (Yh'), and chrominance information signals (U', V') in response to said extended television signals;
means (525, 527; 717, S2') for time-variant filtering said high-frequency luminance information signals (Yh') to furnish high-frequency luminance signals (Yh);
means (529; 723) for combining said low-frequency luminance signals (Y1) and said high-frequency luminance signals (Yh') to furnish luminance signals (Y); and
means (535-541; 719, S3') for time-variant filtering said chrominance information signals (U', V') to furnish chrominance signals (U, V),
wherein both said time-variant filtering means (525, 527; 535-541; 717, 719, S2', S3') include means (213; 717, 719) for delaying a filter input signal over 2, 312 or 1250 lines to obtain a delayed signal, whereby a time-variant filtered signal is obtained (229, 235, 239; S2', S3') in dependence upon said delayed signal and said filter input signal.

8. An arrangement as claimed in claim 7, wherein said separating means (503-523, 533; 703-715) comprise:
means (503-507; 703, 705) for separating said extended television signals into low-frequency luminance signals (Y1) and high-frequency composite signals (Yh* + C*);
means (513; 709) for delaying said high-frequency composite signals (Yh* + C*);
means (517, 519; 713) for adding said high-frequency composite signals (Yh* + C*) and said delayed high-frequency composite signals to furnish said high-frequency luminance information signals (Yh'); and
means (521, 523, 533; 707, 709, 711) for processing said high-frequency composite signals (Yh* + C*) to furnish said chrominance information signals (U', V').

9. An arrangement as claimed in claim 7, wherein in said delaying means (213, 717, 719) the filter input signal is delayed over 312 lines to obtain the delayed signal.

10. An arrangement as claimed in claim 7, wherein both said time-variant filtering means (525, 527; 535-541; 717, 719, S2', S3') comprise means (Fig. 2c) for interpolating a signal to be time-variant filtered, said interpolating means comprising:
means (241; 717, 719) for delaying an interpolation input signal to furnish a delayed signal; and
means (239; S2', S3') for selecting between said interpolation input signal and said delayed signal to furnish a time-variant filtered signal.

11. An arrangement as claimed in claim 10, wherein said delaying means include a field delay, and said selecting means include a field alternating selector.

12. An arrangement as claimed in claim 10, wherein said time-variant filtering means comprise means for decimating said signal to be time-variant filtered, said decimating means comprising means (641-647) for averaging a decimation input signal over a field period to furnish said interpolation input signal.

13. An arrangement as claimed in claim 8, wherein said processing means (521, 523, 533; 711) comprise means (521; 711) for subtracting said high-frequency composite signals and said delayed high-frequency composite signals to furnish said chrominance information signals (C').

14. A method of decoding extended television signals, comprising the steps of:
separating (503-523, 533; 703-715) said extended television signals to provide low-frequency luminance signals (Y1), high-frequency luminance information signals (Yh'), and chrominance information signals (U', V');
time-variant filtering (525, 527; 717, S2') said high-frequency luminance information signals (Yh') to furnish high-frequency luminance signals (Yh);
combining (529; 723) said low-frequency luminance signals (Y1) and said high-frequency luminance signals (Yh) to furnish luminance signals (Y);
time-variant filtering (535-541; 719, S3') said chrominance information signals (U', V') to furnish chrominance signals (U, V),
wherein both said time-variant filtering steps (525, 527; 535-541; 717, 719, S2', S3') include the steps of delaying (213; 717, 719) a filter input signal over 2, 312 or 1250 lines to obtain a delayed signal, and obtaining (229, 235, 239; S2', S3') a time-variant filtered signal in dependence upon said delayed signal and said filter input signal.

15. A method as claimed in claim 14, wherein said separating step (503-523, 533; 703-715) includes the steps of:
separating (503-507; 703, 705) said extended television signals into low-frequency luminance signals (Y1) and high-frequency composite signals (Yh* + C*);
delaying (513; 709) said high-frequency composite signals (Yh* + C*);
adding (517, 519; 713) said high-frequency composite signals (Yh* + C*) and said delayed high-frequency composite signals to furnish said high-frequency luminance information signals (Yh'); and
processing (521, 523, 533; 707, 709, 711) said high-frequency composite signals (Yh* + C*) to furnish said chrominance information signals (U', V').

16. A method as claimed in claim 14, wherein in said delaying step (213, 717, 719) the filter input signal is delayed over 312 lines to obtain the delayed signal.

## Patentansprüche (Patentansprüche für folgende(n) Vertragsstaat(en): AT, BE, CH, DK, GR, IT, LI, LU, NL, SE)

1. Verfahren zum Codieren ausgedehnter Fernsehsignale, wobei dieses Verfahren die nachfolgenden Verfahrensschritte aufweist:
das Liefern (401, 435, 443; 607) von Leuchtdichtesignalen (Y) und Farbartsignalen (U, V).
das Trennen (405-409; 611, 613) der genannten Leuchtdichtesignale (Y) in NF-Leuchtdichtesignale (Y1) und HF-Leuchtdichtesignale (Yh);
das zeitveränderliche Filtern (425, 439, 447; 641,643, 617, S2, 645, 647, 633, S3) der genannten HF-Leuchtdichtesignale (Yh) und der genannten Farbartsignale (U,V) zum Liefern zeitveränderlich gefilterter Leuchtdichtesignale (Yh*) und zeitveränderlich gefilterter Farbartsignale (U*, V*); und
das Kombinieren (421, 451, 455; 627) der genannten NF-Leuchtdichtesignale (Y1), der genannten zeitveränderlich gefilterten Leuchtdichtesignale (Yh*) und der genannten zeitveränderlich gefilterten Farbartsignale (U*, V*) zum Liefern der genannten ausgedehnten Fernsehsignale.

2. Verfahren nach Anspruch 1, wobei der genannte zeitveränderliche Filterschritt (425, 439, 447; 641, 643, 617, S2, 645, 647, 633, S3) die nachfolgenden Verfahrensschritte aufweist:
das Verzögern (213; 641, 645) eines Filtereingangssignal um 2, 312 oder 1250 Zeilen zum Erhalten eines verzögerten Signals; und
das Kombinieren (229, 235; 643, 647) des genannten Eingangssignal und des genannten verzögerten Signals.

3. Verfahren nach Anspruch 1, wobei der genannte zeitveränderliche Filterschritt (425, 439, 447; 641, 643, 617, S2, 645, 647, 633, S3) einen Schritt (Fig. 2c) aufweist zum Interpolieren eines zeitveränderlich zu filternden Signals, wobei dieser Interpolationsschritt die nachfolgenden Verfahrensschritte aufweist:
das Verzögern (241; 617, 633) eines Interpolationseingangssignals zum Liefern eines verzögerten Signals; und
das Selektieren (239; S2, S3) zwischen dem genannten Interpolationseingangssignal und dem genannten verzögerten Signal zum Liefern eines zeitveränderlich gefilterten Signals.

4. Verfahren nach Anspruch 3, wobei das genannte Eingangssignal um eine Teilbildperiode verzögert ist und wobei der genannte Selektionsschritt eine teilbildwechselnde Selektion ist.

5. Verfahren nach Anspruch 3, wobei der genannte zeitveränderliche Filterschritt (425, 439, 447; 641, 643, 617, S2, 645, 647, 633, S3) den Verfahrensschritt der Dezimierung des genannten zeitveränderlich zu filternden Signals aufweist, wobei der genannte Dezimierungsschritt den Verfahrensschritt der Mittelung (641-647) eines Dezimierungseingangssignals um eine Teilbildperiode aufweist zum Liefern des genannten Interpolationseingangssignals.

6. Verfahren nach Anspruch 1 oder 2, wobei der genannte Kombinierschritt (421, 451, 455) die nachfolgenden Verfahrensschritte aufweist:
das Quadraturmodulieren (451) der genannten zeitveränderlich gefilterten Farbartsignale (U*, V*) zum Liefern modulierter Farbartsignale; und
das Addieren (421, 455) der genannten modulierten Farbartsignale, der genannten NF-Leuchtdichtesignale (Y1) und der genannten zeitveränderlich gefilterten Leuchtdichtesignale (Yh*) zum Liefern der genannten ausgedehnten Fernsehsignale.

7. Anordnung zum Decodieren ausgedehnter Fernsehsignale mit:
Trennmitteln (503-523, 533; 703-715) zum Liefern von NF-Leuchtdichtesignalen (Y1), von HF-Leuchtdichtesignalen (Yh') und von Farbartinformationssignalen (Y', V') in Antwort auf die genannten ausgedehnten Fernsehsignale;
Mitteln (525, 527; 717, S2') zum zeitveränderlichen Filtern der genannten HF-Leuchtdichtesignale (Yh') zum Liefern von HF-Leuchtdichtesignalen (Yh);
Mitteln (529; 723) zum Kombinieren der genannten NF-Leuchtdichtesignale (Y1) und der genannten HF-Leuchtdichtesignale (Yh') zum Liefern von Leuchtdichtesignalen (Y) und
Mitteln (535-541; 719, S3') zum zeitveränderlichen Filtern der genannten Farbartinformationssignale (U', V') zum Liefern der genannten Farbartsignale (U, V).

8. Anordnung nach Anspruch 7, wobei die genannten Trennmittel (503-523, 533; 703-715) die nachfolgenden Mittel aufweisen:
Mittel (503-507; 703, 705) zum Trennen der genannten ausgedehnten Fernsehsignale in NF-Leuchtdichtesignale (Y1) und zusammengesetzte HF-Signale (Yh* + C*);
Mittel (513; 709) zum Verzögern der genannten zusammengesetzten HF-Signale (Yh* + C*);
Mittel (517, 519; 713) zum Addieren der genannten zusammengesetzten HF-Signale (Yh* + C*) und der genannten verzögerten zusammengesetzten HF-Signale zum Liefern der genannten HF-Leuchtdichteinformationssignale (Yh'); und
Mittel (521, 523, 533; 707, 709, 711) zum Verarbeiten der genannten zusammengesetzten HF-Signale (Yh* + C*) zum Liefern der genannten Farbartinformationssignale (U', V').

9. Anordnung nach Anspruch 7, wobei die beiden genannten zeitveränderlichen Filtermittel (525, 527; 535-541; 717, 719, S2', S3') die nachfolgenden Mittel aufweisen:
Mittel (213; 717, 719) zum Verzögern eines Filtereingangssignals um 2, 312 oder 1250 Zeilen zum Erhalten eines verzögerten Signals; und
Mittel (229, 235; S2', S3') zum Kombinieren des genannten Filtereingangssignals und des genannten verzögerten Signals.

10. Anordnung nach Anspruch 7, wobei die beiden genannten zeitveränderlichen Filtermittel (525, 527; 535-541; 717, 719, S2', S3') Mittel (Fig. 2c) aufweisen zum Interpolieren eines zeitveränderlich zu filternden Signals, wobei die genannten Interpolationsmittel die nachfolgenden Mittel aufweisen:
Mittel (241; 717, 719) zum Verzögern eines Interpolationseingangssignals zum Liefern eines verzögerten Signals; und
Mittel (239; S2', S3') zum Selektieren zwischen dem genannten Interpolationseingangssignal und dem genannten verzögerten Signal zum Liefern eines zeitveränderlich gefilterten Signals.

11. Anordnung nach Anspruch 10, wobei die genannten Verzögerungsmittel eine Teilbildverzögerungsanordnung aufweisen, und die genannten Selektionsmittel einen teilbildwechselnden Selektor aufweisen.

12. Anordnung nach Anspruch 10, wobei die genannten zeitveränderlichen Filtermittel Mittel aufweisen zum Dezimieren des genannten zeitveränderlich zu filternden Signals, wobei die genannten Dezimierungsmittel Mittel (641-647) aufweisen zum Mitteln eines Dezimierungseingangssignals über eine Teilbildperiode zum Liefern des genannten Interpolationseingangssignals.

13. Anordnung nach Anspruch 8, wobei die genannten Verarbeitungsmittel (521, 523, 533; 711) Mittel (521; 711) aufweisen zum Subtrahieren der genannten zusammengesetzten HF-Signale und der genannten zusammengesetzten verzögerten HF-Signale zum Liefern der genannten Farbartinformationssignale (C').

14. Verfahren zum Decodieren ausgedehnter Fernsehsignale, wobei dieses Verfahren die nachfolgenden Verfahrensschritte aufweist:
das Trennen (503-523, 533; 703-715) der genannten ausgedehnten Fernsehsignale zum Liefern von NF-Leuchtdichtesignalen (Y1), von HF-Leuchtdichteinformationssignalen (Yh') und von Farbartinformationssignalen (U', V');
das zeitveränderliche Filtern (525, 527; 717, S2') der genannten HF-Leuchtdichteinformationssignale (Yh') zum Liefern von HF-Leuchtdichtesignalen (Yh);
das Kombinieren (529; 723) der genannten NF-Leuchtdichtesignalen (Y1) und der genannten HF-Leuchtdichtesignalen (Yh) zum Liefern von Leuchtdichtesignalen (Y);
das zeitveränderliche Filtern (535-541); 719, S3') der genannten Farbartinformationssignale (U', V') zum Liefern von Farbartsignalen (V, V).

15. Verfahren nach Anspruch 14, wobei der genannte Trennschritt (503-523, 533; 703-715) die nachfolgenden Verfahrensschritte aufweist:
das Trennen (503-507; 703, 705) der genannten ausgedehnten Fernsehsignale in NF-Leuchtdichtesignale (Y1) und zusammengesetzte HF-Signale (Yh* + C*);
das Verzögern (513; 709) der genannten zusammengesetzten HF-Signale (Yh* + C*);
das Addieren (517, 519; 713) der genannten zusammengesetzten HF-Signale (Yh* + C*) und der genannten verzögerten zusammengesetzten HF-Signale zum Liefern der genannten HF-Leuchtdichteinformationssignale (Yh'); und
das Verarbeiten (521, 523, 533; 707. 709, 711) der genannten zusammengesetzten HF-Signale (Yh* + C*) zum Liefern der genannten Farbartinformationssignale (U', V').

16. Verfahren nach Anspruch 14, wobei die beiden genannten zeitveränderlichen Filterschritte 525, 527; 535-541; 717, S2', 719, S3') die nachfolgenden Verfahrensschritte aufweisen:
das Verzögern (213; 717, 719) eines Filtereingangssignals um 2, 312 oder 1250 Zeilen zum Erhalten eines verzögerten Signals; und
das Kombinieren (229, 235; S2', S3') des genannten Filtereingangssignals und des genannten verzögerten Signals.

## Patentansprüche (Patentansprüche für folgende(n) Vertragsstaat(en): DE, ES, FR, GB)

1. Verfahren zum Codieren ausgedehnter Fernsehsignale, wobei dieses Verfahren die nachfolgenden Verfahrensschritte aufweist:
das Liefern (401, 435, 443; 607) von Leuchtdichtesignalen (Y) und Farbartsignalen (U, V).
das Trennen (405-409; 611, 613) der genannten Leuchtdichtesignale (Y) in NF-Leuchtdichtesignale (Y1) und HF-Leuchtdichtesignale (Yh);
das zeitveränderliche Filtern (425, 439, 447; 641, 643, 617, S2, 645, 647, 633, S3) der genannten HF-Leuchtdichtesignale (Yh) und der genannten Farbartsignale (U,V) zum Liefern zeitveränderlich gefilterter Leuchtdichtesignale (Yh*) und zeitveränderlich gefilterter Farbartsignale (U*, V*); und
das Kombinieren (421, 451, 455; 627) der genannten NF-Leuchtdichtesignale (Y1), der genannten zeitveränderlich gefilterten Leuchtdichtesignale (Yh*) und der genannten zeitveränderlich gefilterten Farbartsignale (U*, V*) zum Liefern der genannten ausgedehnten Fernsehsignale, wobei der genannte zeitveränderliche Filterschritt (425, 439, 447; 641, 643, 617, S2, 645, 647, 633, S3) den Schritt (213, 241; 617, 633, 641, 645) zum Verzögern eines Filtereingangssignals um 2, 312 oder 1250 Zeilen aufweist zum Erhalten eines verzögerten Signals, wodurch abhängig von dem genannten verzögerten Signal und von dem genannten Filtereingangssignals ein zeitveränderlich gefiltertes Signal erhalten wird (229, 235, 239; 643, 647, S2, S3).

2. Verfahren nach Anspruch 1, wobei in dem genannten Verzögerungsschritt zum Erhalten des genannten verzögerten Signals das Filtereingangssignal um 312 Zeilen verzögert wird.

3. Verfahren nach Anspruch 1, wobei der genannte zeitveränderliche Filterschritt (425, 439, 447; 641, 643, 617, S2, 645, 647, 633, S3) einen Schritt (Fig. 2c) aufweist zum Interpolieren eines zeitveränderlich zu filternden Signals, wobei dieser Interpolationsschritt die nachfolgenden Verfahrensschritte aufweist:
das Verzögern (241; 617, 633) eines Interpolationseingangssignals zum Liefern eines verzögerten Signals; und
das Selektieren (239; S2, S3) zwischen dem genannten Interpolationseingangssignal und dem genannten verzögerten Signal zum Liefern eines zeitveränderlich gefilterten Signals.

4. Verfahren nach Anspruch 3, wobei das genannte Eingangssignal um eine Teilbildperiode verzögert ist und wobei der genannte Selektionsschritt eine teilbildwechselnde Selektion ist.

5. Verfahren nach Anspruch 3, wobei der genannte zeitveränderliche Filterschritt (425, 439, 447; 641, 643, 617, S2, 645, 647, 633, S3) den Verfahrensschritt der Dezimierung des genannten zeitveränderlich zu filternden Signals aufweist, wobei der genannte Dezimierungsschritt den Verfahrensschritt der Mittelung (641-647) eines Dezimierungseingangssignals um eine Teilbildperiode aufweist zum Liefern des genannten Interpolationseingangssignals.

6. Verfahren nach Anspruch 1 oder 2, wobei der genannte Kombinierschritt (421, 451, 455) die nachfolgenden Verfahrensschritte aufweist:
das Quadraturmodulieren (451) der genannten zeitveränderlich gefilterten Farbartsignale (U*, V*) zum Liefern modulierter Farbartsignale; und
das Addieren (421, 455) der genannten modulierten Farbartsignale, der genannten NF-Leuchtdichtesignale (Y1) und der genannten zeitveränderlich gefilterten Leuchtdichtesignale (Yh*) zum Liefern der genannten ausgedehnten Fernsehsignale.

7. Anordnung zum Decodieren ausgedehnter Fernsehsignale mit:
Trennmitteln (503-523, 533; 703-715) zum Liefern von NF-Leuchtdichtesignalen (Y1), von HF-Leuchtdichtesignalen (Yh') und von Farbartinformationssignalen (Y', V') in Antwort auf die genannten ausgedehnten Fernsehsignale;
Mitteln (525, 527; 717, S2') zum zeitveränderlichen Filtern der genannten HF-Leuchtdichtesignale (Yh') zum Liefern von HF-Leuchtdichtesignalen (Yh);
Mitteln (529; 723) zum Kombinieren der genannten NF-Leuchtdichtesignale (Y1) und der genannten HF-Leuchtdichtesignale (Yh') zum Liefern von Leuchtdichtesignalen (Y); und
Mitteln (535-541; 719, S3') zum zeitveränderlichen Filtern der genannten Farbaninformationssignale (U', V') zum Liefern der genannten Farbartsignale (U, V), wobei die beiden genannten zeitveränderlichen Filtermittel (525, 527; 535-541; 717, 719, S2', S3') die Mittel (213; 717, 719) zum Verzögern eines Filtereingangssignals um 2, 312 oder 1250 Zeilen zum Erhalten eines verzögerten Signals aufweisen, wodurch in Abhängigkeit des genannten verzögerten Signals und des genannten Filtereingangssignals ein zeitveränderlich gefiltertes Signal erhalten wird (229, 235, 239; S2', S3') erhalten wird.

8. Anordnung nach Anspruch 7, wobei die genannten Trennmittel (503-523, 533; 703-715) die nachfolgenden Mittel aufweisen:
Mittel (503-507; 703, 705) zum Trennen der genannten ausgedehnten Fernsehsignale in NF-Leuchtdichtesignale (Y1) und zusammengesetzte HF-Signale (Yh* + C*);
Mittel (513; 709) zum Verzögern der genannten zusammengesetzten HF-Signale (Yh* + C*);
Mittel (517, 519; 713) zum Addieren der genannten zusammengesetzten HF-Signale (Yh* + C*) und der genannten verzögerten zusammengesetzten HF-Signale zum Liefern der genannten HF-Leuchtdichteinformationssignale (Yh'); und
Mittel (521, 523, 533; 707, 709, 711) zum Verarbeiten der genannten zusammengesetzten HF-Signale (Yh* + C*) zum Liefern der genannten Farbartinformationssignale (U', V').

9. Anordnung nach Anspruch 7, wobei in den genannten Verzögerungsmitteln (213, 717, 719) das Filtereingangssignal um 312 Zeilen verzögert wird zum Erhalten des verzögerten Signals.

10. Anordnung nach Anspruch 7, wobei die beiden genannten zeitveränderlichen Filtermittel (525, 527; 535-541; 717, 719, S2', S3') Mittel (Fig. 2c) aufweisen zum Interpolieren eines zeitveränderlich zu filternden Signals, wobei die genannten Interpolationsmittel die nachfolgenden Mittel aufweisen:
Mittel (241; 717, 719) zum Verzögern eines Interpolationseingangssignals zum Liefern eines verzögerten Signals; und
Mittel (239; S2', S3') zum Selektieren zwischen dem genannten Interpolationseingangssignal und dem genannten verzögerten Signal zum Liefern eines zeitveränderlich gefilterten Signals.

11. Anordnung nach Anspruch 10, wobei die genannten Verzögerungsmittel eine Teilbildverzögerungsanordnung aufweisen, und die genannten Selektionsmittel einen teilbildwechselnden Selektor aufweisen.

12. Anordnung nach Anspruch 10, wobei die genannten zeitveränderlichen Filtermittel Mittel aufweisen zum Dezimieren des genannten zeitveränderlich zu filternden Signals, wobei die genannten Dezimierungsmittel Mittel (641-647) aufweisen zum Mitteln eines Dezimierungseingangssignals über eine Teilbildperiode zum Liefern des genannten Interpolationseingangssignals.

13. Anordnung nach Anspruch 8, wobei die genannten Verarbeitungsmittel (521, 523, 533; 711) Mittel (521; 711) aufweisen zum Subtrahieren der genannten zusammengesetzten HF-Signale und der genannten zusammengesetzten verzögerten HF-Signale zum Liefern der genannten Farbartinformationssignale (C').

14. Verfahren zum Decodieren ausgedehnter Fernsehsignale, wobei dieses Verfahren die nachfolgenden Verfahrensschritte aufweist:
das Trennen (503-523, 533; 703-715) der genannten ausgedehnten Fernsehsignale zum Liefern von NF-Leuchtdichtesignalen (Y1), von HF-Leuchtdichteinformationssignalen (Yh') und von Farbartinformationssignalen (U', V');
das zeitveränderliche Filtern (525, 527; 717, S2') der genannten HF-Leuchtdichteinformationssignale (Yh') zum Liefern von HF-Leuchtdichtesignalen (Yh);
das Kombinieren (529; 723) der genannten NF-Leuchtdichtesignalen (Y1) und der genannten HF-Leuchtdichtesignalen (Yh) zum Liefern von Leuchtdichtesignalen (Y);
das zeitveränderliche Filtern (535-541); 719, S3') der genannten Farbartinformationssignale (U', V') zum Liefern von Farbartsignalen (V, V),
wobei die beiden genannten zeitveränderlichen Filterschritte (525, 527; 535-541; 717, 719, S2', S3') die nachfolgenden Verfahrensschritte aufweisen, den Schritt der Verzögerung (213; 717, 719) eines Filtereingangssignals um 2, 312 oder 1250 Zeilen zum Erhalten eines verzögerten Signals, und den Schritt zum Erhalten (229, 235, 239; S2', S3') eines zeitveränderlich gefilterten Signals abhängig von dem genannten verzögerten Signal und von dem genannten Filtereingangssignal.

15. Verfahren nach Anspruch 14, wobei der genannte Trennschritt (503-523, 533; 703-715) die nachfolgenden Verfahrensschritte aufweist:
das Trennen (503-507; 703, 705) der genannten ausgedehnten Fernsehsignale in NF-Leuchtdichtesignale (Y1) und zusammengesetzte HF-Signale (Yh* + C*);
das Verzögern (513; 709) der genannten zusammengesetzten HF-Signale (Yh* + C*);
das Addieren (517, 519; 713) der genannten zusammengesetzten HF-Signale (Yh* + C*) und der genannten verzögerten zusammengesetzten HF-Signale zum Liefern der genannten HF-Leuchtdichteinformationssignale (Yh'); und
das Verarbeiten (521, 523, 533; 707. 709, 711) der genannten zusammengesetzten HF-Signale (Yh* + C*) zum Liefern der genannten Farbartinformationssignale (U', V').

16. Verfahren nach Anspruch 14, wobei in dem genannten Verzögerungsschritt (213, 717, 719) das Filtereingangssignal um 312 Zeilen verzögert wird zum Erhalten des verzögerten Signals.

## Revendications (Revendications pour l'(les) Etat(s) contractant(s) suivant(s): AT, BE, CH, DK, GR, IT, LI, LU, NL, SE)

1. Procédé de codage de signaux de télévision étendus, ledit procédé comprenant les étapes suivantes:
fournir (401, 435, 443; 607) des signaux de luminance (Y) et de chrominance (U, V);
séparer (405 à 409; 611, 613) lesdits signaux de luminance (Y) en signaux de luminance de basses fréquences (Y1) et signaux de luminance de hautes fréquences (Yh);
soumettre à un filtrage variant dans le temps (425, 439, 447; 641, 643, 617, S2, 645, 647, 633, S3) lesdits signaux de luminance de hautes fréquences (Yh) et lesdits signaux de chrominance (U, V) pour délivrer des signaux de luminance filtrés variant dans le temps (Yh*) et des signaux de chrominance filtrés variant dans le temps (U*, V*), et
combiner (421, 451, 455; 627) lesdits signaux de luminance de basses fréquences (Y1), lesdits signaux de luminance filtrés variant dans le temps (Yh*) et lesdits signaux de chrominance filtrés variant dans le temps (U*, V*) pour délivrer lesdits signaux de télévision étendus.

2. Procédé selon la revendication 1, dans lequel ladite étape de filtrage variant dans le temps (425, 439, 447; 641, 643, 617, S2, 645, 647, 633, S3) comprend les étapes suivantes:
retarder (213; 641, 645) un signal d'entrée de filtre de 2, 312 ou 1250 lignes pour obtenir un signal retardé, et
combiner (229, 235; 643, 647) ledit signal d'entrée de filtre et ledit signal retardé.

3. Procédé selon la revendication 1, dans lequel ladite étape de filtrage variant dans le temps (425, 439, 447; 641, 643, 617, S2, 645, 647, 633, S3) comprend une interpolation (Fig. 2c) d'un signal à soumettre à un filtrage variant dans le temps, ladite étape d'interpolation comprenant les étapes suivantes:
retarder (241; 617, 633) un signal d'entrée d'interpolation pour délivrer un signal retardé, et
effectuer une sélection (239; S2, S3) entre ledit signal d'entrée d'interpolation et ledit signal retardé pour délivrer un signal filtré variant dans le temps.

4. Procédé selon la revendication 3, dans lequel ledit signal d'entrée est retardé d'une période de trame et ladite étape de sélection est une sélection en alternance de trame.

5. Procédé selon la revendication 3, dans lequel ladite étape de filtrage variant dans le temps (425, 439, 447; 641, 643, 617, S2, 645, 647, 633, S3) comprend l'étape de décimation dudit signal à soumettre à un filtrage variant dans le temps, ladite étape de décimation comprenant l'étape de calcul de moyenne (641-647) d'un signal d'entrée de décimation sur une période de trame pour délivrer ledit signal d'entrée d'interpolation.

6. Procédé selon la revendication 1 ou 2, dans lequel ladite étape de combinaison (421, 451, 455) comprend les étapes suivantes:
moduler en quadrature (451) lesdits signaux de chrominance filtrés variant dans le temps (U*, V*) pour délivrer des signaux de chrominance modulés, et
additionner (421, 455) lesdits signaux de chrominance modulés, lesdits signaux de luminance de basses fréquences (Y1) et lesdits signaux de luminance filtrés variant dans le temps (Yh*) pour délivrer lesdits signaux de télévision étendu.

7. Montage pour décoder des signaux de télévision étendus, comprenant :
des moyens de séparation (503-523, 533; 703-715) pour délivrer des signaux de luminance de basses fréquences (Y1), des signaux d'information de luminance de hautes fréquences (Yh') et des signaux d'information de chrominance (U', V') en réaction auxdits signaux de télévision étendus;
des moyens (525, 527; 717, S2') pour soumettre à un filtrage variant dans le temps lesdits signaux d'information de luminance de hautes fréquences (Yh') pour délivrer des signaux de luminance de hautes fréquences (Yh);
des moyens (529; 723) pour combiner lesdits signaux de luminance de basses fréquences (Y1) et lesdits signaux de luminance de hautes fréquences (Yh') pour délivrer des signaux de luminance (Y), et
des moyens (535-541; 719, S3') pour soumettre à un filtrage variant dans le temps lesdits signaux d'information de chrominance (U', V') pour délivrer des signaux de chrominance (U, V).

8. Montage selon la revendication 7, dans lequel lesdits moyens de séparation (503-523, 533; 703-715) comprennent :
des moyens (503-507; 703, 705) pour séparer lesdits signaux de télévision étendus en signaux de luminance de basses fréquences (Y1) et en signaux composites de hautes fréquences (Yh* + C*);
des moyens (513; 709) pour retarder lesdits signaux composites de hautes fréquences (Yh* + C*);
des moyens (517, 519; 713) pour additionner lesdits signaux composites de hautes fréquences (Yh* + C*) et lesdits signaux composites de hautes fréquences retardés pour délivrer lesdits signaux d'information de luminance de hautes fréquences (Yh'), et
des moyens (521, 523, 533; 707, 709, 711) pour traiter lesdits signaux composites de hautes fréquences (Yh* + C*) pour délivrer lesdits signaux d'information de chrominance (U', V').

9. Montage selon la revendication 7, dans lequel lesdits deux moyens de filtrage variant dans le temps (525, 527; 535-541; 717, 719, S2' S3') comprennent :
des moyens (213; 717, 719) pour retarder le signal d'entrée de filtre de 2, 312 ou 1250 lignes pour obtenir un signal retardé, et
des moyens (229, 235; S2', S3') pour combiner ledit signal d'entrée de filtre et ledit signal retardé.

10. Montage selon la revendication 7, dans lequel lesdits deux moyens de filtrage variant dans le temps (525, 527; 535-541; 717, 719, S2', S3') comprennent des moyens (Fig. 2c) pour interpoler un signal à soumettre à un filtrage variant dans le temps, lesdits moyens d'interpolation comprenant :
des moyens (241; 717, 719) pour retarder un signal d'entrée d'interpolation pour délivrer un signal retardé, et
des moyens (239; S2', S3') pour effectuer une sélection entre le signal d'entrée d'interpolation et ledit signal retardé afin de délivrer un signal filtré variant dans le temps.

11. Montage selon la revendication 10, dans lequel lesdits moyens de retardement comprennent un élément à retard de trame et lesdits moyens de sélection comprennent un sélecteur d'alternance de trame.

12. Montage selon la revendication 10, dans lequel lesdits moyens de filtrage variant dans le temps comprennent des moyens pour décimer ledit signal à soumettre à un filtrage variant dans le temps, lesdits moyens de décimation comprenant des moyens (641-647) pour calculer la moyenne d'un signal d'entrée de décimation sur une période de trame afin de délivrer ledit signal d'interpolation.

13. Montage selon la revendication 8, dans lequel lesdits moyens de traitement (521, 523, 533; 711) comprennent des moyens (521; 711) pour soustraire lesdits signaux composites de hautes fréquences et lesdits signaux composites de hautes fréquences retardés afin de délivrer lesdits signaux d'information de chrominance (C').

14. Procédé de décodage de signaux de télévision étendus, comprenant les étapes suivantes:
séparer (503-523, 533; 703-715) lesdits signaux de télévision étendus pour obtenir des signaux de luminance de basses fréquences (Y1), des signaux d'information de luminance de hautes fréquences (Yh') et des signaux d'information de chrominance (U', V');
soumettre à un filtrage variant dans le temps (525, 527; 717, S2') lesdits signaux d'information de luminance de hautes fréquences (Yh') pour délivrer des signaux de luminance de hautes fréquences (Yh);
combiner (529; 723) lesdits signaux de luminance de basses fréquences (Y1) et lesdits signaux de luminance de hautes fréquences (Yh) pour délivrer des signaux de luminance (Y);
soumettre à un filtrage variant dans le temps (535-541; 719, S3') lesdits signaux d'information de chrominance (U', V') pour délivrer des signaux de chrominance (U, V).

15. Procédé selon la revendication 14, dans lequel ladite étape de séparation (503-523, 533; 703-715) comprend les étapes suivantes:
séparer (503-507; 703, 705) lesdits signaux de télévision étendus en signaux de luminance de basses fréquences (Y1) et en signaux composites de hautes fréquences (Yh* + C*);
retarder (513; 709) lesdits signaux composites de hautes fréquences (Yh* + C*);
additionner (517, 519; 713) lesdits signaux composites de hautes fréquences (Yh* + C*) et lesdits signaux composites de hautes fréquences retardés pour délivrer lesdits signaux d'information de luminance de hautes fréquences (Yh'), et
traiter (521, 523, 533; 707, 709, 711) lesdits signaux composites de hautes fréquences (Yh* + C*) pour délivrer lesdits signaux d'information de chrominance (U', V').

16. Procédé selon la revendication 14, dans lequel lesdites étapes de filtrage variant dans le temps (525, 527; 535-541; 717, S2', 719, S3') comprennent les étapes suivantes :
retarder (213; 717, 719) un signal d'entrée de filtre de 2, 312 ou 1250 lignes pour obtenir un signal retardé, et
combiner (229, 235; S2', S3') ledit signal d'entrée de filtre et ledit signal retardé.

## Revendications (Revendications pour l'(les) Etat(s) contractant(s) suivant(s): DE, ES, FR, GB)

1. Procédé de codage de signaux de télévision étendus, ledit procédé comprenant les étapes suivantes:
fournir (401, 435, 443; 607) des signaux de luminance (Y) et de chrominance (U, V);
séparer (405-409; 611, 613) lesdits signaux de luminance (Y) en signaux de luminance de basses fréquences (Y1) et en signaux de luminance de hautes fréquences (Yh);
soumettre à un filtrage variant dans le temps (425, 439, 447; 641, 643, 617, S2, 645, 647, 633, S3) lesdits signaux de luminance de hautes fréquences (Yh) et lesdits signaux de chrominance (U, V) pour délivrer des signaux de luminance filtrés variant dans le temps (Yh*) et des signaux de chrominance filtrés variant dans le temps (U*, V*), et
combiner (421, 451, 455; 627) lesdits signaux de luminance de basses fréquences (Y1), lesdits signaux de luminance filtrés variant dans le temps (Yh*) et lesdits signaux de chrominance filtrés variant dans le temps (U*, V*) pour délivrer lesdits signaux de télévision étendus,
dans lequel ladite étape de filtrage variant dans le temps (425, 439, 447; 641, 643, 617, S2, 645, 647, 633, S3) comprend l'étape de retarder (213, 241; 617, 633, 641, 645) un signal d'entrée de filtre de 2, 312 ou 1250 lignes pour obtenir un signal retardé, de telle manière que l'on obtienne un signal filtré variant dans le temps (229, 235, 239; 643, 647, S2, S3) en fonction dudit signal retardé et dudit signal d'entrée de filtre.

2. Procédé selon la revendication 1, dans lequel, dans ladite étape de retardement, le signal d'entrée de filtre est retardé de 312 lignes pour obtenir le signal retardé.

3. Procédé selon la revendication 1, dans lequel ladite étape de filtrage variant dans le temps (425, 439, 447; 641, 643, 617, S2, 645, 647, 633, S3) comprend une interpolation (Fig. 2c) d'un signal à soumettre à un filtrage variant dans le temps, ladite étape d'interpolation comprenant les étapes suivantes:
retarder (241; 617, 633) un signal d'entrée d'interpolation pour délivrer un signal retardé, et
effectuer une sélection (239; S2, S3) entre ledit signal d'entrée d'interpolation et ledit signal retardé pour délivrer un signal filtré variant dans le temps.

4. Procédé selon la revendication 3, dans lequel ledit signal d'entrée est retardé d'une période de trame et ladite étape de sélection est une sélection en alternance de trame.

5. Procédé selon la revendication 3, dans lequel ladite étape de filtrage variant dans le temps (425, 439, 447; 641, 643, 617, S2, 645, 647, 633, S3) comprend l'étape de décimation dudit signal à soumettre à un filtrage variant dans le temps, ladite étape de décimation comprenant l'étape de calcul de moyenne (641-647) d'un signal d'entrée de décimation sur une période de trame pour délivrer ledit signal d'entrée d'interpolation.

6. Procédé selon la revendication 1 ou 2, dans lequel ladite étape de combinaison (421, 451, 455) comprend les étapes suivantes:
moduler en quadrature (451) lesdits signaux de chrominance filtrés variant dans le temps (U*, V*) pour délivrer des signaux de chrominance modulés, et
additionner (421, 455) lesdits signaux de chrominance modulés, lesdits signaux de luminance de basses fréquences (Y1) et lesdits signaux de luminance filtrés variant dans le temps (Yh*) pour délivrer lesdits signaux de télévision étendus.

7. Montage pour décoder des signaux de télévision étendus, comprenant:
des moyens de séparation (503-523, 533; 703-715) pour délivrer des signaux de luminance de basses fréquences (Y1), des signaux d'information de luminance de hautes fréquences (Yh') et des signaux d'information de chrominance (U', V') en réaction auxdits signaux de télévision étendus;
des moyens (525, 527; 717, S2') pour soumettre à un filtrage variant dans le temps lesdits signaux d'information de luminance de hautes fréquences (Yh') pour délivrer des signaux de luminance de hautes fréquences (Yh);
des moyens (529; 723) pour combiner lesdits signaux de luminance de basses fréquences (Y1) et lesdits signaux de luminance de hautes fréquences (Yh') pour délivrer des signaux de luminance (Y), et
des moyens (535-541; 719, S3') pour soumettre à un filtrage variant dans le temps lesdits signaux d'information de chrominance (U', V') pour délivrer des signaux de chrominance (U, V),
dans lequel lesdits deux moyens de filtrage variant dans le temps (525, 527; 535-541; 717, 719, S2', S3') comprennent des moyens (213; 717, 719) pour retarder un signal d'entrée de filtre de 2, 312 ou 1250 lignes pour obtenir un signal retardé, de telle manière que l'on obtienne un signal filtré variant dans le temps (229, 235, 239; S2', S3') en fonction dudit signal retardé et dudit signal d'entrée de filtre.

8. Montage selon la revendication 7, dans lequel lesdits moyens de séparation (503-523, 533; 703-715) comprennent :
des moyens (503-507; 703, 705) pour séparer lesdits signaux de télévision étendus en signaux de luminance de basses fréquences (Y1) et en signaux composites de hautes fréquences (Yh* + C*);
des moyens (513; 709) pour retarder lesdits signaux composites de hautes fréquences (Yh* + C*);
des moyens (517, 519; 713) pour additionner lesdits signaux composites de hautes fréquences (Yh* + C*) et lesdits signaux composites de hautes fréquences retardés pour délivrer lesdits signaux d'information de luminance de hautes fréquences (Yh'), et
des moyens (521, 523, 533; 707, 709, 711) pour traiter lesdits signaux composites de hautes fréquences (Yh* + C*) pour délivrer lesdits signaux d'information de chrominance (U', V').

9. Montage selon la revendication 7, dans lequel, dans lesdits moyens à retard (213, 717, 719), le signal d'entrée de filtre est retardé de 312 lignes pour obtenir le signal retardé.

10. Montage selon la revendication 7, dans lequel lesdits deux moyens de filtrage variant dans le temps (525, 527; 535-541; 717, 719, S2', S3') comprennent des moyens (Fig. 2c) pour interpoler un signal à soumettre à un filtrage variant dans le temps, lesdits moyens d'interpolation comprenant :
des moyens (241; 717, 719) pour retarder un signal d'entrée d'interpolation pour délivrer un signal retardé, et
des moyens (239; S2', S3') pour effectuer une sélection entre le signal d'entrée d'interpolation et ledit signal retardé afin de délivrer un signal filtré variant dans le temps.

11. Montage selon la revendication 10, dans lequel lesdits moyens à retard comprennent un élément à retard de trame et lesdits moyens de sélection comprennent un sélecteur d'alternance de trame.

12. Montage selon la revendication 10, dans lequel lesdits moyens de filtrage variant dans le temps comprennent des moyens pour décimer ledit signal à soumettre à un filtrage variant dans le temps, lesdits moyens de décimation comprenant des moyens (641-647) pour calculer la moyenne d'un signal d'entrée de décimation sur une période de trame afin de délivrer ledit signal d'interpolation.

13. Montage selon la revendication 8, dans lequel lesdits moyens de traitement (521, 523, 533; 711) comprennent des moyens (521; 711) pour soustraire lesdits signaux composites de hautes fréquences et lesdits signaux composites de hautes fréquences retardés afin de délivrer lesdits signaux d'information de chrominance (C').

14. Procédé de décodage de signaux de télévision étendus, comprenant les étapes suivantes:
séparer (503-523, 533; 703-715) lesdits signaux de télévision étendus pour obtenir des signaux de luminance de basses fréquences (Y1), des signaux d'information de luminance de hautes fréquences (Yh') et des signaux d'information de chrominance (U',V');
soumettre à un filtrage variant dans le temps (525, 527; 717, S2') lesdits signaux d'information de luminance de hautes fréquences (Yh') pour délivrer des signaux de luminance de hautes fréquences (Yh);
combiner (529; 723) lesdits signaux de luminance de basses fréquences (Y1) et lesdits signaux de luminance de hautes fréquences (Yh) pour délivrer des signaux de luminance (Y);
soumettre à un filtrage variant dans le temps (535-541; 719, S3') lesdits signaux d'information de chrominance (U', V') pour délivrer des signaux de chrominance (U, V),
dans lequel lesdites deux étapes de filtrage variant dans le temps (525, 527; 535-541; 717, 719, S2', S3') comprennent les étapes de retarder (213; 717, 719) d'un signal d'entrée de filtre de 2, 312 ou 1250 lignes pour obtenir un signal retardé et à obtenir (229, 235, 239; S2', S3') un signal filtré variant dans le temps en fonction dudit signal retardé et dudit signal d'entrée de filtre.

15. Procédé selon la revendication 14, dans lequel ladite étape de séparation (503-523, 533; 703-715) comprend les étapes suivantes:
séparer (503-507; 703, 705) lesdits signaux de télévision étendus en signaux de luminance de basses fréquences (Y1) et en signaux composites de hautes fréquences (Yh* + C*);
retarder (513; 709) lesdits signaux composites de hautes fréquences (Yh* + C*);
additionner (517, 519; 713) lesdits signaux composites de hautes fréquences (Yh* + C*) et lesdits signaux composites de hautes fréquences retardés pour délivrer lesdits signaux d'information de luminance de hautes fréquences (Yh'), et
traiter (521, 523, 533; 707, 709, 711) lesdits signaux composites de hautes fréquences (Yh* + C*) pour délivrer lesdits signaux d'information de chrominance (U', V').

16. Procédé selon la revendication 14, dans lequel, dans ladite étape de retardement (213, 717, 719), le signal d'entrée de filtre est retardé de 312 lignes pour obtenir le signal retardé.
